# EUROPEAN PATENT APPLICATION

(11) **EP 1 226 996 A2**
(43) Date of publication of application: **31.07.2002**
(21) Application number: 01126521.2
(22) Date of filing: 13.11.2001
(51) Int. Cl.: B60L 11/18

(54) **Motor controller for battery forklift**

(30) Priority: 25.01.2001 JP 2001016699
(71) Applicant: Mitsubishi Heavy Industries, Ltd., Tokyo (JP)
(72) Inventor: Kobayashi, Shinichi, Mitsubishi Heavy Ind., Ltd., Nakamura-ku, Nagoya-shi, Aichi-ken (JP); Onuma, Hitoshi, Mitsubishi Heavy Ind., Ltd., Nakamura-ku, Nagoya-shi, Aichi-ken (JP); Nakano, Koji, Mitsubishi Heavy Ind., Ltd., Nakamura-ku, Nagoya-shi, Aichi-ken (JP); Morimoto, Masayuki, Mitsubishi Heavy Ind., Ltd., Nakamura-ku, Nagoya-shi, Aichi-ken (JP)
(74) Representative: HOFFMANN - EITLE

(57) **Abstract**

The present invention provides an AC motor controller for a battery forklift operated by driving an AC motor via a three-phase bridge inverter using a battery as an energy source, wherein it is possible to replace only a damaged arm, and the control signal of each arm is isolated with a transformerless constitution, by using a diode. The AC motor controller comprises the three-phase bridge inverter containing three arms having semiconductor elements connected in series on their positive side and negative side, wherein the three arms, each of which constitutes a mounting unit, form a module, and each of the three arms is independently removable.

## Description

### BACKGROUND OF THE INVENTION

### Field of the Invention

The present invention relates to an alternating current (AC) motor controller for a battery forklift operated by driving an AC motor via a three-phase bridge inverter using a battery as an energy source.

### Description of the Related Art

The battery forklifts of the prior art use direct current (DC) motors, and the electric power applied to the DC motor is controlled by a chopper.

However, because DC electric motors have commutators, they are difficult to maintain and their lifespan is short, and as a result, recently, systems wherein an AC motor is driven by AC power generated by an inverter have come into use.

Further, IGBT's have been commonly used as the semiconductor in the inverter, but the DC voltage is low, such as 48V, and at the time of saturation, loses arise as a result of the ON resistance and the current which flows. Therefore, MOSFET's have come into use because they can be more readily connected in parallel.

The system of controlling an AC motor with a controller using an inverter is well suited for use for driving battery forklifts, because the torque and rotation speed of the motor can be freely controlled by controlling the voltage and frequency applied to the motor, and recently this system has found widespread application.

Typically, one forklift must usually be provided with two types of controller and AC motor; one for driving and one for lifting.

Even in the above method of using an AC motor and an inverter, the MOSFET's which constitute the inverter of the controller are subject to damage by overcurrents or other causes, and it becomes necessary to replace the damaged semiconductor.

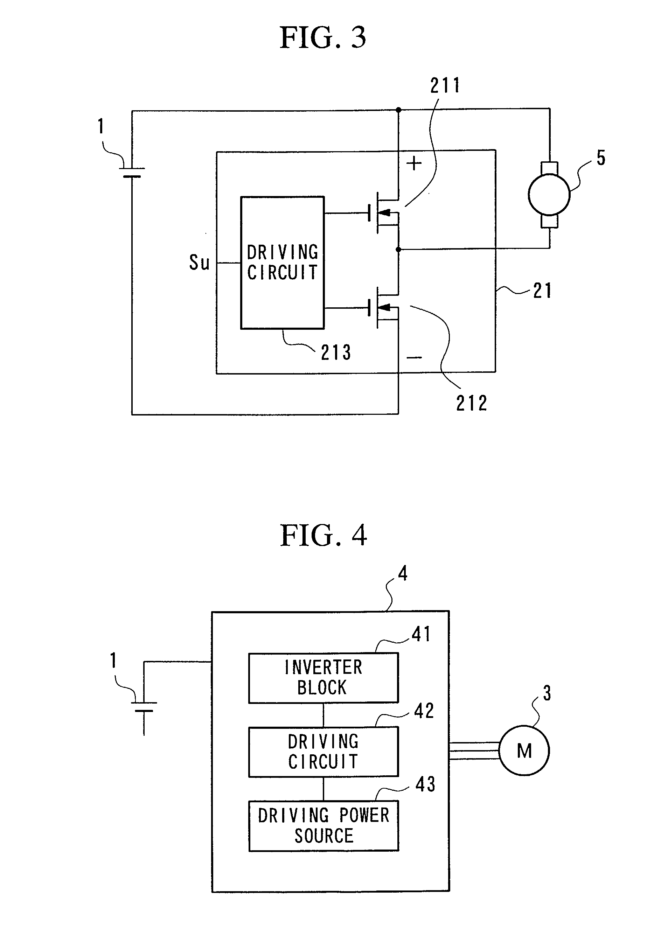

In the prior art, as shown in Fig. 4, the inverter block 41 of the controller 4 is mounted in such a way that the three arms U, V, and W which constitute the three-phase bridge inverter are consolidated into one package. As a result, even though it is unusual for all of the semiconductor elements to be damaged at the same time, it is necessary to replace the U, V, and W phase inverter blocks at the same time, even if only one of the semiconductor elements is damaged, and there is the problem that the maintenance costs become high.

Further, in the above inverter block, the driving circuit 42 and the driving power source 43 are separate, and therefore, there is the problem that the layout becomes complex.

Further, the above inverter block cannot also be used as a chopper for driving a DC motor, and there is the problem that the parts for maintenance are not interchangeable.

### SUMMARY OF THE INVENTION

The present invention was made in view of the above situation, and has as one objective to provide an AC motor controller for use in a battery forklift constituted so that, in the inverter block of the controller, it is possible to replace only the arm which has damaged semiconductor elements.

Another objective of the present invention is to provide an AC motor controller for use in a battery forklift wherein the driving circuit is built into the inverter block and the control signal for each arm of the inverter block can be applied to the semiconductors, which are isolated with a transformerless constitution.

Further, another objective of the present invention is to provide a motor controller wherein one arm of the AC motor controller can also be used as a chopper for a DC motor.

The first aspect of the present invention provides an AC motor controller for a battery forklift comprising: a three-phase bridge inverter through which an AC motor is driven using a battery as an energy source to operate the forklift, which comprises three arms having semiconductor elements connected in series on their positive side and negative side, wherein the three arms, each of which constitutes a mounting unit, form a module, and each of the three arms is independently removable.

The AC motor controller is constituted so as to be replaced only an arm containing a damaged semiconductor.

The second aspect of the invention provides an AC motor controller for use in a battery forklift according to the first aspect of the invention, wherein each of the three arms has a built-in driving circuit, and can be operated by directly applying a control signal.

According to this aspect of the invention, it is possible to simplify the control circuit by building the driving circuit into the inverter block and making the inverter block operable by directly applying a control signal.

The third aspect of the invention provides a motor controller for use in a battery forklift according to the second aspect of the invention, wherein the driving circuit provides driving electric power with a charge pump circuit using the electric charging and discharging of a condenser, and has a transformerless constitution wherein said control signal is isolated by a diode.

According to this aspect of the invention, by applying a signal and isolating the driving circuit with a transformerless constitution, the circuit can be simplified, and made lighter, and therefore, the layout can be made compact, and maintenance can be carried out more easily.

The fourth aspect of the invention provides a DC motor controller including, as a dual-use module, the one arm of the AC motor controller of any of the first to third aspects of the invention is a dual-use module.

According to this aspect of the invention, the one arm of the AC motor controller can also be used as a chopper to drive the DC motor, and the parts for maintenance can be made interchangeable.

### BRIEF DESCRIPTION OF THE DRAWINGS

Fig. 1 is a block diagram showing the constitution of one embodiment of the AC motor controller for a battery forklift of the present invention.
Fig. 2 shows the constitution of the U phase (V phase, W phase) arm 21 (arm 22, arm 23) of the controller.
Fig. 3 is a block diagram showing the constitution of an embodiment of the DC motor controller for the battery forklift of the present invention.
Fig. 4 is a block diagram showing the constitution of an AC motor controller for a battery forklift of the prior art.

### DETAILED DESCRIPTION OF THE INVENTION

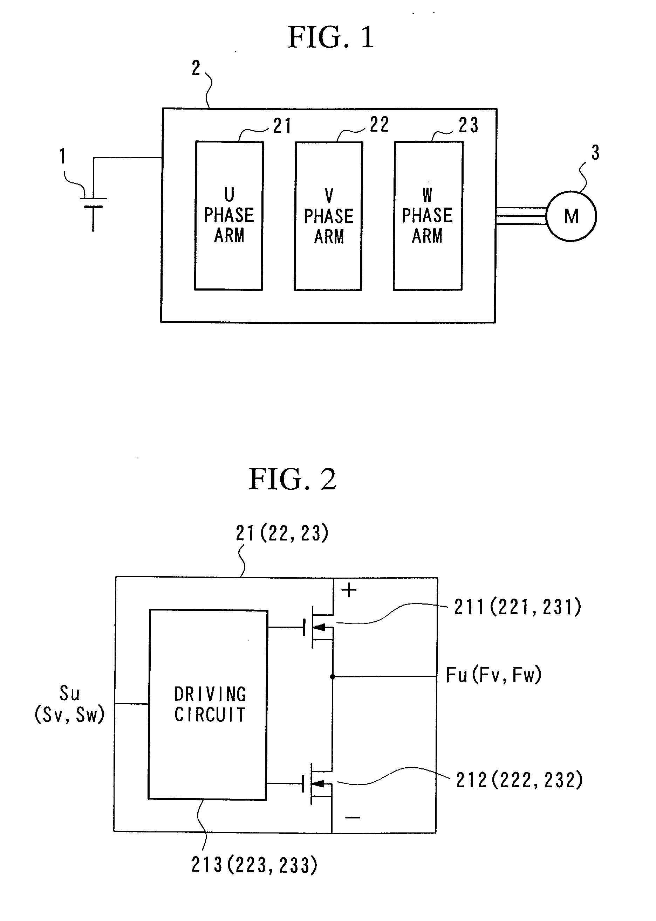

The embodiments of the invention will be described below with reference to the drawings. Fig. 1 is a block diagram showing the constitution of the AC motor controller for use in a battery forklift of the first embodiment of the invention.

As shown in this figure, the DC electric power of the battery 1 is converted to AC electric power having a predetermined frequency and voltage in the controller 2, and drives an AC motor 3.

The inverter which constitutes the controller 2 has a U phase arm 21, a V phase arm 22 and a W phase arm 23 each of which constitutes a mounting unit, and these three arms form a three-phase bridge inverter.

Fig. 2 shows the constitution of the U phase (V phase, W phase) arm 21 (arm 22, arm 23) of the three phase arms shown in Fig. 1.

In this figure, the Metal Oxide Semiconductor Field Effect Transistors (MOSFET's) 211 (221, 231) and 212 (222, 232) are connected in series, and the terminal labeled "+" and the terminal labeled "-" are connected to the battery, and the MOSFET 211 (221, 231) and the MOSFET 212 (222, 232) are driven by a driving signal generated by the driving circuit 213 (223,233) based on a control signal applied by the terminal Su (Sv, Sw), and a positive or a negative voltage is output by the terminal Fu (Fv, Fw).

The internal circuitry of the driving circuit 213 (223, 233) built into the each of the phase arms of the inverter is not shown in the drawing, but it supplies electric power for driving the MOSFET 211 (221, 231) of the high potential side with a booster circuit using the electric charging and discharging of a condenser by means of a charge pump circuit, and has a transformerless constitution wherein a diode isolation circuit isolates the non-isolated input signal applied by the terminal Su (Sv, Sw).

Consequently, there is no need for a driving power source transformer, and the driving circuit can be made more compact and it is easier to use a modular layout, and its location can be optimized.

By driving the MOSFET 211 (221, 231) and the MOSFET 212 (222, 232) by means of the U phase (V phase, W phase) arm 21 (arm 22, arm 23), a predetermined AC voltage having a predetermined frequency can be output from the terminal Fu (Fv, Fw), and the AC motor 3 can be driven.

As described above, the three arms constituting the U, V and W phases of the inverter are modularly mounted as independent packages with each arm constituting a mounting unit, and therefore, it is possible to reduce the maintenance costs and make maintenance easier by replacing only an arm which has suffered a breakdown of an element.

Further, there is the advantage that it is possible to use the arm for any of the phases as the chopper for a DC current motor.

Further, because the direct current voltage may be low, such as 48V, MOSFET's are used for the semiconductor elements constituting the U phase (V phase, W phase) arm 21 (arm 22, arm 23).

A plurality of MOSFET elements are connected in parallel depending on the value of the current actually required, and are operated so as to switch ON and OFF at the same time by applying the same signal. Usually, 10 to 20 MOSFET elements can be connected in parallel to provide a large electric current.

While for an Insulated Gate Bipolar Transistor (IGBT), the saturation voltage at ON is constant, for a MOSFET, the resistance at ON is fixed and the voltage at ON corresponds to the value of the current. Therefore, MOSFET's can be easily connected in parallel.

Further, for one battery forklift, two types of the above controller and motor are necessary, one for driving and one for lifting.

In the following, another embodiment of the invention will be described with reference to Fig. 3.

This embodiment is a method for also using one arm (arm 21 of phase U in Fig. 2) of the three arms which constitute the U, V, and W phases of the above inverter as a chopper to control a DC motor 5.

In Fig. 3, when the MOSFET 212 is in the ON state, the DC motor 5 is provided with electric power by application of the voltage of the battery 1, and when the MOSFET 212 is in the OFF sate, the direct current from the DC motor 5 flows through the MOSFET 211.

In this way, one arm of the inverter which controls the AC motor can also be used as a chopper, which has the advantage that the parts for maintenance can be made interchangeable.

In the above, the operation of embodiments of the present invention was explained in detail with reference to the figures, but the present invention is not limited to the above embodiments, and includes any changes in design which do not deviate from the gist of the present invention.

For example, the semiconductor elements which constitute the inverter of the controller are not limited to MOSFET's, and can also be other types of semiconductor elements, for example IGBT's.

As explained above, according to the present invention, the three arms of the inverter, each of which constitutes a mounting unit, form a module, and can each be individually replaced, and therefore, it is only necessary to replace a damaged arm, which provides the effect of making it possible to reduce labor and parts costs.

Further, one arm can also be used as a controller for an AC motor, and therefore, it is possible to make the replacement parts interchangeable, and quantitative effects can be expected as a result.

Further, a separately located electric power supply unit can be eliminated, and therefore, it is easy to design the layout, which provides the effect of making it possible to optimize the layout.

Further, since there is no need for a driving power source transformer, a driving circuit can be made more compact and it is easier to use a modular layout, and its location can be optimized.

## Claims

1. An AC motor controller for a battery forklift comprising:
a three-phase bridge inverter through which an AC motor is driven using a battery as an energy source to operate the forklift, which comprises three arms having semiconductor elements connected in series on their positive side and negative side, wherein
the three arms, each of which constitutes a mounting unit, form a module, and
each of the three arms is independently removable.

2. An AC motor controller for a battery forklift according to claim 1, wherein each of the three arms has a built-in driving circuit, and can be operated by directly applying a control signal.

3. An AC motor controller for a battery forklift according to claim 2, wherein the driving circuit provides electric driving power with a charge pump circuit using the electric charging and discharging of a condenser, and has a transformerless constitution wherein said control signal is isolated by a diode.

4. A DC motor controller including, as a dual-use module, the one arm of the AC motor controller according to claim 1.
